# EUROPEAN PATENT APPLICATION

(11) **EP 3 730 238 A1**
(43) Date of publication of application: **28.10.2020**
(21) Application number: 18892385.8
(22) Date of filing: 22.11.2018
(51) Int. Cl.: B22F 9/26, B22F 9/24, C22B 3/14, C22B 3/44, C22B 23/00

(54) **METHOD FOR PRODUCING NICKEL POWDER**

(30) Priority: 21.12.2017 JP 2017245631
(71) Applicant: SUMITOMO METAL MINING CO., LTD., Tokyo 105-8716 (JP)
(72) Inventor: HEGURI Shin-ichi, Niihama-shi, Ehime 792-0002 (JP); TAKAISHI Kazuyuki, Niihama-shi, Ehime 792-0002 (JP)
(74) Representative: Müller-Boré & Partner Patentanwälte PartG mbB
(86) International application number: PCT/JP2018/043216
(87) International publication number: WO 2019/123972

(57) **Abstract**

Provided is a method for manufacturing coarse particles of a so-called high-purity nickel powder with a small amount of impurities, particularly having a low sulfur grade, from a nickel sulfate ammine complex solution using a fine nickel powder.

A method for manufacturing a nickel powder includes the following treatment steps (1) to (6) in a process for manufacturing a nickel powder from a nickel sulfate solution: (1) a hydroxylation step; (2) a complexation step; (3) a reduction step; (4) a solid/liquid separation step; (5) a nickel recovery step of repeatedly supplying the recovered nickel powder to step (2) and/or step (3), sulfurating the recovered final reduction solution, and then solid/liquid separating the sulfurated solution to generate nickel sulfide and a nickel post-reduction solution; and (6) a nickel regeneration step of oxidatively leaching the nickel sulfide obtained in step (5) and repeatedly supplying the obtained nickel sulfate solution to step (1).

## Description

### Technical Field

The present invention relates to a method for obtaining a high-purity nickel powder having a low sulfur grade from a nickel sulfate ammine complex solution and a briquette obtained by solidifying the nickel powder.

In particular, the present invention can be applied to a treatment of an intermediate generating solution generated in a step in a nickel hydrometallurgical process.

### Background Art

As a method for industrially manufacturing a nickel powder using a hydrometallurgical process, there is a method for manufacturing a nickel powder by dissolving a raw material in a sulfuric acid solution, then removing impurities, adding ammonia to the obtained nickel sulfate solution to form a nickel ammine complex, and supplying a hydrogen gas to the generated nickel sulfate ammine complex solution to reduce the nickel.

For example, Non Patent Literature 1 describes a nickel powder manufacturing process for adding an iron compound as a seed crystal during a reduction reaction and precipitating nickel on the iron compound. However, this method has a disadvantage that iron derived from the seed crystal is mixed into a product.

Furthermore, a method for obtaining a nickel powder using a reducing agent other than a hydrogen gas has been proposed so far.

For example, Patent Literature 1 discloses a method for providing a nickel powder that is inexpensive, has excellent weather resistance, has a low electric resistance in a state of being kneaded with a resin, reduces an initial electric resistance and an electric resistance during use, can be used stably for a long time, and is suitable as a conductive particle for a conductive paste and a conductive resin, and a method for manufacturing the nickel powder.

The nickel powder disclosed in Patent Literature 1 contains 1 to 20% by mass of cobalt and the balance composed of nickel and unavoidable impurities, is formed of secondary particles obtained by aggregating primary particles, and contains 0.8% by mass or less of oxygen. It is stated that cobalt is preferably contained only in a surface layer of the secondary particles, and the cobalt content in the surface layer is preferably 1 to 40% by mass. When this nickel powder is to be obtained by the disclosed manufacturing method, cobalt coexists. This method is not suitable, for example, for an application to separate nickel and cobalt from each other when nickel and cobalt coexist as in nickel oxide ore, and to recover nickel and cobalt with high purity and economically.

Furthermore, Patent Literature 2 provides a method for manufacturing a metal powder by a liquid phase reduction method. This method has been improved such that particle aggregates are not easily generated.

This manufacturing method includes: a first step of preparing an aqueous solution containing metal ions derived from a metal compound by dissolving the metal compound, a reducing agent, a complexing agent, and a dispersant; and a second step of reducing the metal ions with the reducing agent by adjusting the pH of the aqueous solution to precipitate a metal powder.

However, this manufacturing method is expensive due to use of expensive chemicals, and is not economically advantageous when being applied to a large-scale process as the above nickel hydrometallurgy.

As described above, various processes for manufacturing a nickel powder have been proposed. However, a method for manufacturing a high-purity nickel powder using an industrially inexpensive hydrogen gas has not been proposed.

### Citation List

### Patent Literature

Patent Literature 1: JP 2005-240164 A
Patent Literature 2: JP 2010-242143 A

### Non Patent Literature

Non Patent Literature 1: POWDER METALLURGY, 1958, No. 1/2, p. 40-52.

### Summary of Invention

### Technical Problem

Under such circumstances, an object is to provide a method for manufacturing, using an industrially inexpensive hydrogen gas, coarse particles of a so-called high-purity nickel powder, containing a small amount of impurities and particularly having a low sulfur grade, from a nickel sulfate ammine complex solution using a fine nickel powder.

### Solution to Problem

A first aspect of the present invention for solving the above problems provides a method for manufacturing a nickel powder from a nickel sulfate solution, including:
(1) a hydroxylation step of adding an alkali to the nickel sulfate solution to generate a precipitate of nickel hydroxide;
(2) a complexation step of adding a final reduction solution obtained from a solid/liquid separation step (4) and a nickel powder as a seed crystal to the precipitate of nickel hydroxide generated in the hydroxylation step (1), and dissolving the precipitate of the nickel hydroxide to form a mixed slurry containing a nickel sulfate ammine complex solution, the seed crystal, and the nickel hydroxide;
(3) a reduction step of blowing a hydrogen gas into the mixed slurry formed in the complexation step (2) to form a reduced slurry containing a nickel powder formed by precipitation of a nickel component in the mixed slurry on the seed crystal;
(4) a solid/liquid separation step of solid/liquid separating the reduced slurry formed in the reduction step (3) and recovering a nickel powder and a final reduction solution;
(5) a nickel recovery step of repeatedly supplying the recovered nickel powder to either or both of the complexation step (2) and the reduction step (3), adding a sulfurizing agent to the recovered final reduction solution, precipitating nickel sulfide, and subjecting it to solid/liquid separation to generate nickel sulfide and a nickel post-reduction solution; and
(6) a nickel regeneration step of oxidatively leaching the nickel sulfide obtained in the nickel recovery step (5) and repeatedly supplying the obtained nickel sulfate solution to the hydroxylation step (1).

A second aspect of the present invention provides a method for manufacturing a nickel powder, in which sieving the nickel powder recovered in the solid/liquid separation step (4) in the first aspect of the present invention according to a particle size, selecting a nickel powder having a smaller size than a predetermined particle size, and adding the selected nickel powder to either or both of the complexation step (2) and the reduction step (3) as a seed crystal are repeatedly performed to obtain a nickel powder having a larger particle size than the nickel powder as the seed crystal.

A third aspect of the present invention provides a method for manufacturing a nickel powder, in which the seed crystal added in either or both of the complexation step (2) and the reduction step (3) in the second aspect of the present invention has an average particle size of 0.1 to 100 µm.

A fourth aspect of the present invention provides a method for manufacturing a nickel powder, in which when the mixed slurry containing a nickel sulfate ammine complex solution, a seed crystal, and nickel hydroxide is formed in the complexation step (2) in the first to third aspects of the present invention, a dispersant is further added to the mixed slurry.

A fifth aspect of the present invention provides a method for manufacturing a nickel powder, in which the seed crystal is added in an amount of 1 to 100% with respect to the weight of nickel in the nickel sulfate ammine complex solution in the complexation step (2) in the first to fourth aspects of the present invention.

A sixth aspect of the present invention provides a method for manufacturing a nickel powder, in which the reduced slurry in the first to fifth aspects of the present invention is sieved, and the sieved nickel powder and the sieved reduced slurry as a final reduction solution are repeatedly used as a part of the final reduction solution and the nickel powder as a seed crystal in the complexation step (2).

A seventh aspect of the present invention provides a method for manufacturing a nickel powder, in which the complexation step (2) in the sixth aspect of the present invention includes two steps of a dissolving step of adding a final reduction solution to obtain a nickel sulfate ammine complex solution, and a seed crystal adding step of adding a nickel powder or a mixed slurry containing a nickel powder and a final reduction solution.

An eighth aspect of the present invention provides a method for manufacturing a nickel powder, in which the nickel sulfate solution in the first aspect of the present invention is obtained by dissolving at least one selected from a mixed sulfide of nickel and cobalt recovered by leaching nickel oxide ore, nickel sulfide, crude nickel sulfate, nickel oxide, nickel hydroxide, nickel carbonate, and a nickel metal powder, in a sulfuric acid acidic solution.

A ninth aspect of the present invention provides a method for manufacturing a nickel powder, in which the nickel sulfate solution in the first aspect of the present invention is obtained through a leaching step of dissolving a nickel-containing material containing cobalt as impurities, and a solvent extraction step of adjusting the pH of a leachate containing nickel and cobalt obtained in the leaching step and then separating the leachate into a nickel sulfate solution and a cobalt recovery solution by a solvent extraction method.

A tenth aspect of the present invention provides a method for manufacturing a nickel powder, in which the ammonium sulfate concentration in the nickel sulfate ammine complex solution in the first aspect of the present invention is 100 to 500 g/L, and the ammonium concentration is 1.9 or more in a molar ratio with respect to the nickel concentration in the complex solution.

An eleventh aspect of the present invention provides a method for manufacturing a nickel powder, in which blowing of a hydrogen gas is performed, while the temperature is maintained in a range of 100 to 200°C and the pressure is maintained in a range of 0.8 to 4.0 MPa in the reduction step (3) in the first aspect of the present invention.

A twelfth aspect of the present invention provides a method for manufacturing a nickel powder, in which the dispersant in the fourth aspect of the present invention contains a polyacrylate.

A thirteenth aspect of the present invention provides a method for manufacturing a nickel powder, further including: a nickel powder briquetting step of processing the nickel powder obtained through the reduction step (3) in the first aspect of the present invention into a massive nickel briquette using a briquetting machine; and a briquette sintering step of sintering the obtained massive nickel briquette in a hydrogen atmosphere under a holding condition of a temperature of 500 to 1200°C to form a nickel briquette as a sintered body.

A fourteenth aspect of the present invention provides a method for manufacturing a nickel powder, further including an ammonium sulfate recovery step of concentrating the final reduction solution in the solid/liquid separation step (4) in the first aspect of the present invention, crystallizing ammonium sulfate, and recovering an ammonium sulfate crystal.

A fifteenth aspect of the present invention provides a method for manufacturing a nickel powder, further including an ammonia recovery step of adding an alkali to the final reduction solution in the solid/liquid separation step (4) in the first aspect of the present invention, heating the resulting mixture, volatilizing an ammonia gas, and recovering ammonia.

### Advantageous Effects of Invention

The present invention provides a method for manufacturing a nickel powder from a nickel sulfate ammine complex solution using a hydrogen gas, in which a high-purity nickel powder with a small amount of impurities can be easily obtained, and an industrially remarkable effect is exhibited.

### Brief Description of Drawings

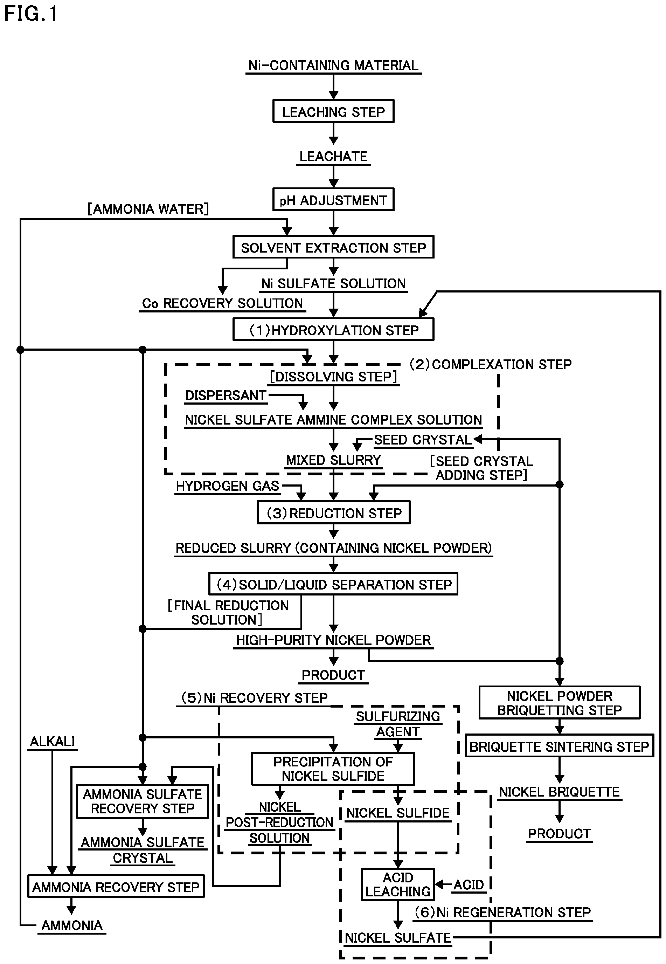

Fig. 1 is a flowchart for manufacturing a nickel powder according to the present invention.

### Description of Embodiments

The present invention provides a method for manufacturing a nickel powder from a nickel sulfate ammine complex solution, in which by subjecting a process liquid in a hydrometallurgical process to the following steps (1) to (6), a high-purity nickel powder with a smaller amount of impurities is manufactured from a nickel ammine sulfate complex solution.

Hereinafter, the method for manufacturing a high-purity nickel powder according to the present invention will be described with reference to the flowchart for manufacturing a high-purity nickel powder according to the present invention illustrated in Fig. 1.

### [Leaching step]

First, a leaching step is for dissolving, with a sulfuric acid, one selected from the group consisting of a mixed sulfide of nickel and cobalt, crude nickel sulfate, nickel oxide, nickel hydroxide, nickel carbonate, a nickel powder, and the like which are starting raw materials, or a nickel-containing material such as an industrial intermediate containing a mixture of a plurality of substances, and for leaching nickel to generate a leachate (a sulfuric acid solution containing nickel). This leaching step is performed by a known method disclosed in JP 2005-350766 A or the like.

### [Solvent extraction step]

Next, the pH of the leachate is adjusted, and the leachate is subjected to a solvent extraction step.

In this step, the leachate adjusted in pH after being obtained in the leaching step is brought into contact with an organic phase, and the components in the phases are exchanged to increase the concentration of a certain component in the aqueous phase and to decrease the concentration of another component.

In the present invention, by using 2-ethylhexylphosphonic acid mono-2-ethylhexyl ester or di-(2,4,4-trimethylpentyl) phosphinic acid as the organic phase, an impurity element in the leachate, particularly cobalt is selectively extracted as a cobalt recovery solution to obtain a nickel sulfate solution having a low cobalt concentration.

Note that as ammonia water used for pH adjustment in this step, ammonia water generated in an ammonia recovery step described later can also be used.

### (1) Hydroxylation step

In the present invention, an alkali is added to a nickel sulfate solution obtained, for example, through the above-described steps to generate a precipitate of nickel hydroxide, and the precipitate as a solid component and a liquid component are separated from each other.

By this treatment, many of impurities contained in nickel sulfate are separated into the liquid component. This enables to reduce the concentration of impurities contained in the precipitate of nickel hydroxide, which is a solid component.

As the alkali to be added, it is preferable to use one that can be prepared industrially at low cost and in large quantities, such as sodium hydroxide or calcium hydroxide.

### (2) Complexation step

This complexation step specifically includes two steps of a dissolving step and a seed crystal adding step. First, in the dissolving step, to nickel hydroxide which is the precipitate obtained in the hydroxylation step (1), ammonia in a form of a final reduction solution obtained by solid/liquid separation of the reduced slurry obtained in the reduction step (3) is added to form a mixed solution of nickel hydroxide and the final reduction solution. The mixed solution is thereby subjected to a complexation treatment to generate a nickel sulfate ammine complex which is an ammine complex of nickel, and thus forming a nickel ammine complex solution.

At this time, an ammonia concentration can be adjusted by adding an ammonia gas or ammonia water. At this time, ammonia is added such that the ammonia concentration is 1.9 or more in a molar ratio with respect to a nickel concentration in the solution. When the ammonium concentration of ammonia added is less than 1.9, nickel does not form an ammine complex, and a precipitate of nickel hydroxide is generated.

In addition, in order to adjust an ammonium sulfate concentration, ammonium sulfate can be added in this step.

At this time, the ammonium sulfate concentration is preferably 100 to 500 g/L. When the ammonium sulfate concentration exceeds 500 g/L, the ammonium sulfate concentration exceeds a solubility, and crystals are precipitated. It is difficult to attain that the ammonium sulfate concentration is less than 100 g/L due to a metal balance in the process.

Furthermore, as the ammonia gas or the ammonia water used in this step, an ammonia gas or ammonia water generated in an ammonia recovery step described later can be used.

Furthermore, following the dissolving step, a seed crystal adding step is performed in which a nickel powder having an average particle size of 0.1 to 100 µm is added as a seed crystal in a form of a nickel powder slurry to the generated nickel sulfate ammine complex solution to form a mixed slurry containing the seed crystal, the nickel sulfate ammine complex solution, and nickel hydroxide.

The weight of the seed crystal added at this time is preferably 1 to 100% with respect to the weight of nickel in the nickel sulfate ammine complex solution. When the above ratio is less than 1%, reaction efficiency is significantly reduced at the time of reduction in a subsequent step. When the above ratio exceeds 100%, the amount used is large, and manufacture of the seed crystal is costly and not economical.

In addition, a dispersant may be added at the same time. Since the seed crystals are dispersed by adding the dispersant, the efficiency can be increased in a subsequent reduction step.

The dispersant used here is not particularly limited as long as containing a sulfonate, but a lignin sulfonate is preferable because the lignin sulfonate can be obtained industrially at low cost.

### (3) Reduction step

In this reduction step, a hydrogen gas is blown into the obtained mixed slurry, a nickel component in the solution is reduced, and the nickel component is precipitated on the seed crystal to form a reduced slurry containing a nickel powder.

At this time, the reaction temperature is preferably 100 to 200°C. When the temperature is lower than 100°C, more preferably lower than 150°C, reduction efficiency decreases. Even when the temperature is higher than 200°C, there is no influence on the reaction, and a loss in thermal energy or the like increases.

The pressure during the reaction is preferably 0.8 to 4.0 MPa. When the pressure is less than 0.8 MPa, reaction efficiency is reduced. Even when the pressure exceeds 4.0 MPa, there is no influence on the reaction, and a loss in hydrogen gas increases.

Note that in the liquid of the obtained mixed slurry, a magnesium ion, a sodium ion, a calcium ion, a sulfate ion, and an ammonium ion are mainly present as impurities, but all of these ions remain in the solution. Therefore, a high-purity nickel powder can be generated.

In addition, nickel hydroxide in the liquid of the mixed slurry reacts with an ammonium ion generated by the reduction reaction, is dissolved as a nickel ammine complex in the solution, and is reduced by reacting with a hydrogen gas to precipitate nickel on the seed crystal.

### (4) Solid/liquid separation step

The reduced slurry generated in the previous reduction step (3) is solid/liquid separated to recover a high-purity nickel powder with a small amount of impurities and a final reduction solution. The high-purity nickel powder is repeatedly supplied to the complexation step (2) and/or the reduction step (3), in which the high-purity nickel powder is used as a seed crystal in the complexation step (2), and is used as a nickel powder to be subjected to particle growth in the reduction step (3).

Meanwhile, the recovered final reduction solution is repeatedly supplied as a substitute for ammonia water in the complexation step (2).

That is, out of the recovered high-purity nickel powder with a small amount of impurities, a small-sized nickel powder or a nickel powder having a reduced size by grinding or the like is repeatedly supplied as a seed crystal to the complexation step (2). Here, the nickel powder is further added to the nickel sulfate ammine complex solution obtained in the complexation step (2). In the reduction step (3), a hydrogen gas is supplied thereto, and nickel is thereby further reduced and precipitated on the high-purity nickel powder. Therefore, the particles can be grown.

In addition, by the repeated supply to the reduction step a plurality of times, a high-purity nickel powder having a higher bulk density and a larger particle size can also be generated.

Furthermore, the obtained high-purity nickel powder may be processed into a briquette shape which is coarser, hardly oxidized, and easily handled through the following nickel powder briquetting step or briquette firing step.

An ammonia recovery step may be further provided.

### [Nickel powder briquetting step]

The high-purity nickel powder manufactured by the present invention is dried and then formed into a massive nickel briquette as a product form by a briquetting machine or the like.

In order to improve formability into the briquette, a substance that does not contaminate a product quality, such as water, may be added to the nickel powder as a binder in some cases.

### [Briquette sintering step]

The nickel briquette prepared in the briquetting step is roasted and sintered in a hydrogen atmosphere to prepare a briquette sintered body. This treatment increases the strength and removes trace amounts of residual ammonia and sulfur components. The roasting and sintering temperature is preferably 500 to 1200°C. When the temperature is lower than 500°C, sintering is insufficient. Even when the temperature is higher than 1200°C, efficiency hardly changes, and a loss in energy increases.

### (5) Nickel recovery step

Nickel remains in the final reduction solution generated in the solid/liquid separation step (4). When the amount of residual nickel is large, the nickel may be mixed into an ammonium sulfate crystal generated in a subsequent ammonium sulfate recovery step to contaminate the quality of the ammonium sulfate crystal. Therefore, it is necessary to remove the residual nickel in advance.

A sulfurizing agent used here may be an industrially used sulfurizing agent such as a hydrogen sulfide gas or sodium hydrogen sulfide, but is preferably a hydrogen sulfide gas in order to further improve the quality of the ammonium sulfate crystal.

(6) Nickel regeneration step Nickel sulfide precipitated by adding a sulfurizing agent is solid/liquid separated and recovered. Thereafter, the recovered nickel sulfide can be leached again, and repeatedly supplied to the system. In this leaching, when nickel sulfide recovered in the previous nickel recovery step is leached dedicatedly and singly, there are few disadvantages such as impurities, and high efficiency is preferably obtained. In addition, when nickel sulfide recovered in the previous nickel recovery step is repeatedly supplied to the above [leaching step] as one of the starting raw materials described above, equipment saving can be achieved, which is preferable. Note that a nickel post-reduction solution in the aqueous phase is sent to a subsequent step.

### [Ammonium sulfate recovery step]

The nickel post-reduction solution generated in the above [nickel recovery step] contains ammonium sulfate and ammonia.

Therefore, the solution after reaction is heated and concentrated through an ammonium sulfate recovery step to crystallize ammonium sulfate, and ammonium sulfate can be recovered as an ammonium sulfate crystal.

### [Ammonia recovery step]

By adding an alkali to the final reduction solution, adjusting the pH to 10 to 13, and then heating the resulting solution, an ammonia gas is volatilized, and ammonia can be recovered.

The alkali used here is not particularly limited, but caustic soda, slaked lime, and the like are industrially inexpensive and suitable.

Furthermore, by bringing the recovered ammonia gas into contact with water, ammonia water can be generated, and the obtained ammonia water can be repeatedly used in a step.

### Examples

Hereinafter, the present invention will be described in more detail with reference to Examples.

### Example 1

By adding 800 ml of slaked lime adjusted so as to have a slurry concentration of 200 g/L to 1000 ml of a nickel sulfate solution having a nickel concentration of 120 g/L, 116 g of nickel hydroxide was obtained.

The nickel hydroxide was added to 1700 ml of a mixed solution of a nickel sulfate solution having a nickel concentration of 30 g/L and an ammonium sulfate solution having an ammonia concentration of 40 g/L together with 12.8 g of nickel powder having an average particle size of 2 µm as a seed crystal, and the resulting mixture was stirred to prepare a mixed slurry.

This mixed slurry was heated to 185°C while being stirred in an autoclave. A hydrogen gas was blown and supplied into the autoclave such that the pressure in the autoclave became 3.5 MPa to be subjected to the reduction step. Thereafter, the resulting product was subjected to the solid/liquid separation step by filtration, and a nickel powder with particle growth was recovered.

At this time, the recovered nickel powder had an average particle size of 65 µm and a recovery amount of 119 g.

Furthermore, the recovered nickel powder was washed with pure water, and then the impurity grade of the nickel powder was analyzed.

Results thereof are illustrated in Table 1. Mg or Na was not mixed into the nickel powder, and a high-purity nickel powder could be generated.

**[Table 1]**

| | Ni | Mg | Na |
|---|---|---|---|
| Example 1 | - | <0.005% | <0.005% |

### Example 2

By adding 800 ml of slaked lime adjusted so as to have a slurry concentration of 200 g/L to 1000 ml of a nickel sulfate solution having a nickel concentration of 120 g/L, 116 g of nickel hydroxide was obtained.

The 116 g of nickel hydroxide was mixed with a nickel sulfate ammine complex solution having a nickel concentration of 30 g/L, 232 ml of 25% ammonia water, and 225 g of ammonium sulfate, and pure water was added thereto to prepare 1000 ml of mixed slurry. To this solution, 20 g of nickel powder having an average particle size of 1 µm was added as a seed crystal to prepare a mixed slurry.

Next, the prepared mixed slurry was heated to 120°C while being stirred in an autoclave. A hydrogen gas was blown and supplied into the autoclave such that the pressure in the autoclave became 3.5 MPa to perform a nickel powder generation treatment which is a reduction treatment.

One hour after the supply of the hydrogen gas, the supply of the hydrogen gas was stopped, and the autoclave was cooled. The reduced slurry obtained after cooling was subjected to the solid/liquid separation treatment by filtration, and a high-purity and small-size nickel powder was recovered. The recovered nickel powder at this time was 70 g.

Next, 116 g of nickel hydroxide was added to the final reduction solution after the solid/liquid separation to prepare a slurry. To the slurry, the whole amount of the recovered high-purity and small-size nickel powder was added to prepare a mixed slurry.

The mixed slurry was heated to 120°C while being stirred in an autoclave. A hydrogen gas was blown and supplied into the autoclave such that the pressure in the autoclave became 3.5 MPa.

One hour after the supply of the hydrogen gas, the supply of the hydrogen gas was stopped, and the autoclave was cooled. The slurry obtained after cooling was solid/liquid separated by filtration, and a high-purity nickel powder with particle growth was recovered.

### Example 3

Using the final reduction solution obtained in the solid/liquid separation step in Example 1 as a part of an ammonia source, a mixed slurry was prepared, subjected to the reduction step under the same conditions as in Example 1, and subjected to the solid/liquid separation step, and a nickel powder with particle growth was recovered. A nickel powder similar to that in Example 1 was recovered.

### Example 4

To a solution containing a nickel powder prepared under the same conditions as in Example 1, 336 g of nickel sulfate, and 330 g of ammonium sulfate, 191 ml of 25% ammonia water was added, and a total liquid volume was adjusted to 1000 ml. Thereafter, the resulting solution was again subjected to the reduction step under the same conditions as in Example 1 and the solid/liquid separation step to prepare a nickel powder with particle growth. Using the nickel powder thus prepared, the same operation was repeated 10 times to cause particle growth of the nickel powder.

The average particle size of the recovered nickel powder was 111 µm, and the nickel powder caused particle growth so as to be 1.7 times larger than the nickel powder in Example 1.

The nickel powder obtained by these repeated operations had a sulfur grade of 0.04%. The amount of each of sodium and magnesium was below a lower quantification limit as in Table 1 above.

Furthermore, the obtained nickel powder was heated to 1000°C in a 2% hydrogen atmosphere and held for 60 minutes. The nickel powder obtained after being thus held had a sulfur grade of 0.008%, and the sulfur grade could be further reduced by roasting.

### Example 5

To 1000 ml of a nickel sulfate ammine complex solution illustrated in Table 2, 75 g of nickel powder having an average particle size of 1 µm was added as a seed crystal. Thereafter, the resulting mixture was heated to 185°C while being stirred in an autoclave, and a hydrogen gas was blown and supplied into the autoclave such that the pressure in the autoclave became 3.5 MPa.

One hour after the supply of the hydrogen gas, the supply of the hydrogen gas was stopped, and the autoclave was cooled. The slurry obtained after cooling was solid/liquid separated by filtration. The recovered nickel powder was washed with pure water. Thereafter, the impurity grade of the nickel powder was analyzed.

Results thereof are illustrated in Table 2.

Mg or Na was not mixed into the nickel powder, and a high-purity nickel powder could be generated.

**[Table 2]**

| | | Ni | Mg | Na |
|---|---|---|---|---|
| Example 5 | Nickel sulfate ammine complex solution | 75 [g/L] | 0.1 [g/L] | 7.0 [g/L] |
| | High-purity nickel powder | - | <0.005% | <0.005% |

### Example 6

75 g of nickel hydroxide was added to a nickel sulfate ammine complex solution prepared by mixing 135 g of nickel sulfate hexahydrate, 191 ml of 25% ammonia water, 169 g of ammonium sulfate, and pure water, and pure water was added thereto such that the liquid volume became 1000 ml. 15 g of nickel powder having an average particle size of 1 µm was added thereto as a seed crystal to prepare a mixed slurry.

The mixed slurry was heated to 100°C while being stirred in an autoclave. A hydrogen gas was supplied into the autoclave such that the pressure in the autoclave became 3.5 MPa to perform a nickel powder generation treatment.

One hour after the supply of the hydrogen gas, the supply of the hydrogen gas was stopped, and the autoclave was cooled. The reduced slurry obtained after cooling was subjected to a solid/liquid separation treatment by filtration, and a high-purity and small-size nickel powder was recovered. At this time, a nickel reduction ratio was 58%.

### Example 7

Using the same mixed slurry as in Example 6, the same operation as in Example 6 was performed under the conditions of a temperature of 100°C and a pressure in the autoclave of 0.8 MPa. At this time, a nickel reduction ratio was 56%.

### Example 8

Using the same mixed slurry as in Example 6, the same operation as in Example 6 was performed under the conditions of a temperature of 120°C and a pressure in the autoclave of 3.5 MPa. At this time, a nickel reduction ratio was 74%.

### Example 9

Using the same mixed slurry as in Example 6, the same operation as in Example 6 was performed under the conditions of a temperature of 120°C and a pressure in the autoclave of 2.0 MPa. At this time, a nickel reduction ratio was 74%.

### Example 10

Using the same mixed slurry as in Example 6, the same operation as in Example 6 was performed under the conditions of a temperature of 120°C and a pressure in the autoclave of 1.5 MPa. At this time, a nickel reduction ratio was 74%.

As can be seen from the results of Examples 6 to 10 illustrated in Table 3, high-purity nickel was generated in all the cases, and it is found that the reduction ratio is not significantly affected by the pressure and is significantly reduced due to a temperature decrease.

**[Table 3]**

| | Temperature [°C] | Pressure [MPa] | Ni reduction ratio [%] |
|---|---|---|---|
| Example 6 | 100 | 3.5 | 58 |
| Example 7 | 100 | 0.8 | 56 |
| Example 8 | 120 | 3.5 | 74 |
| Example 9 | 120 | 2.0 | 74 |
| Example 10 | 120 | 1.5 | 74 |

### (Comparative Example 1)

A nickel powder was prepared under the same conditions as in Example 1 except that without performing the hydroxylation step in Example 1, 7.5 g of nickel powder having an average particle size of 1 µm was added, as a seed crystal, to a solution prepared by adding 191 ml of 25% ammonia water to a solution containing a nickel sulfate solution containing 75 g of nickel and 330 g of ammonium sulfate, and adjusting the total liquid volume to 1000 ml, to prepare a mixed slurry.

The recovered nickel powder was washed with pure water, and then the impurity grade of the nickel powder was analyzed.

Results thereof are illustrated in Table 4. The amount of Mg or Na mixed into the nickel powder was larger than that in Example 1. Note that the average particle size and the recovery amount were almost the same as those in Example 1.

**[Table 4]**

| | Ni | Mg | Na |
|---|---|---|---|
| Comparative Example 1 | - | 0.02% | 0.02% |

### (Comparative Example 2)

Using the same method as in Comparative Example 1, a nickel powder was prepared without performing the hydroxylation step. The operation was performed on the nickel powder repeatedly 10 times in the same manner as in Example 3 to particle growth. The nickel powder obtained by these repeated operations had a sulfur grade of 0.1%. It was not possible to obtain such a high-purity nickel powder having a sulfur grade of about 0.04% as obtained in Example 3 of the present invention.

### Example 11

According to a component analysis of the final reduction solution generated in Example 1, it is found that 1 g/L of nickel remained in the final reduction solution.

Therefore, the final reduction solution was put in an airtight vessel, heated to 60°C, and sulfurated by blowing a hydrogen sulfide gas thereinto in a total volume of 1.0 L while being stirred. Thereafter, the resulting solution was solid/liquid separated to obtain nickel sulfide and a nickel post-reduction solution. The nickel concentration in the obtained nickel post-reduction solution was reduced to 0.01 g/L, and it is found that that most of nickel was recovered as nickel sulfide.

## Claims

1. A method for manufacturing a nickel powder from a nickel sulfate solution, comprising:
(1) a hydroxylation step of adding an alkali to the nickel sulfate solution to generate a precipitate of nickel hydroxide;
(2) A complexation step of adding a final reduction solution obtained from a solid/liquid separation step (4) and a nickel powder as a seed crystal to the precipitate of nickel hydroxide generated in the hydroxylation step (1), and dissolving the precipitate of the nickel hydroxide to form a mixed slurry containing a nickel sulfate ammine complex solution, the seed crystal, and the nickel hydroxide;
(3) a reduction step of blowing a hydrogen gas into the mixed slurry formed in the complexation step (2) to form a reduced slurry containing a nickel powder formed by precipitation of a nickel component in the mixed slurry on the seed crystal;
(4) a solid/liquid separation step of solid/liquid separating the reduced slurry formed in the reduction step (3) and recovering a nickel powder and a final reduction solution;
(5) a nickel recovery step of repeatedly supplying the recovered nickel powder to either or both of the complexation step (2) and the reduction step (3), adding a sulfurizing agent to the recovered final reduction solution, precipitating nickel sulfide, and subjecting it to solid/liquid separation to generate nickel sulfide and a nickel post-reduction solution; and
(6) a nickel regeneration step of oxidatively leaching the nickel sulfide obtained in the nickel recovery step (5) and repeatedly supplying the obtained nickel sulfate solution to the hydroxylation step (1).

2. The method for manufacturing a nickel powder according to claim 1, wherein
sieving the nickel powder recovered in the solid/liquid separation step (4) according to a particle size, selecting a nickel powder having a smaller size than a predetermined particle size, and adding the selected nickel powder to the complexation step (2) and/or the reduction step (3) as a seed crystal are repeatedly performed to obtain a nickel powder having a larger particle size than the nickel powder as the seed crystal.

3. The method for manufacturing a nickel powder according to claim 2, wherein
the seed crystal added in either or both of the complexation step (2) and the reduction step (3) has an average particle size of 0.1 to 100 µm.

4. The method for manufacturing a nickel powder according to any one of claims 1 to 3, wherein
when the mixed slurry containing a nickel sulfate ammine complex solution, a seed crystal, and nickel hydroxide is formed in the complexation step (2), a dispersant is further added to the mixed slurry.

5. The method for manufacturing a nickel powder according to any one of claims 1 to 4, wherein
the seed crystal is added in an amount of 1 to 100% with respect to a weight of nickel in the nickel sulfate ammine complex solution in the complexation step (2).

6. The method for manufacturing a nickel powder according to any one of claims 1 to 5, wherein
the reduced slurry is sieved, and the sieved nickel powder and the sieved reduced slurry as a final reduction solution are repeatedly used as a part of the final reduction solution and the nickel powder as a seed crystal in the complexation step (2).

7. The method for manufacturing a nickel powder according to claim 6, wherein
the complexation step (2) includes two steps of
a dissolving step of adding a final reduction solution to obtain a nickel sulfate ammine complex solution, and
a seed crystal adding step of adding a nickel powder or a mixed slurry containing a nickel powder and a final reduction solution.

8. The method for manufacturing a nickel powder according to claim 1, wherein
the nickel sulfate solution is obtained by dissolving at least one selected from a mixed sulfide of nickel and cobalt recovered by leaching nickel oxide ore, nickel sulfide, crude nickel sulfate, nickel oxide, nickel hydroxide, nickel carbonate, and a nickel metal powder, in a sulfuric acid acidic solution.

9. The method for manufacturing a nickel powder according to claim 1, wherein
the nickel sulfate solution is obtained through
a leaching step of dissolving a nickel-containing material containing cobalt as impurities, and
a solvent extraction step of adjusting a pH of a leachate containing nickel and cobalt obtained in the leaching step and then separating the leachate into a nickel sulfate solution and a cobalt recovery solution by a solvent extraction method.

10. The method for manufacturing a nickel powder according to claim 1, wherein
an ammonium sulfate concentration in the nickel sulfate ammine complex solution is 100 to 500 g/L, and an ammonium concentration is 1.9 or more in a molar ratio with respect to a nickel concentration in the complex solution.

11. The method for manufacturing a nickel powder according to claim 1, wherein
blowing of a hydrogen gas performed while a temperature is maintained in a range of 100 to 200°C and a pressure is maintained in a range of 0.8 to 4.0 MPa in the reduction step (3).

12. The method for manufacturing a nickel powder according to claim 4, wherein
the dispersant contains a polyacrylate.

13. The method for manufacturing a nickel powder according to claim 1, further comprising:
a nickel powder briquetting step of processing the nickel powder obtained through the reduction step (3) into a massive nickel briquette using a briquetting machine; and
a briquette sintering step of sintering the obtained massive nickel briquette in a hydrogen atmosphere under a holding condition of a temperature of 500 to 1200°C to form a nickel briquette as a sintered body.

14. The method for manufacturing a nickel powder according to claim 1, further comprising
an ammonium sulfate recovery step of concentrating the final reduction solution in the solid/liquid separation step (4), crystallizing ammonium sulfate, and recovering an ammonium sulfate crystal.

15. The method for manufacturing a nickel powder according to claim 1, further comprising
an ammonia recovery step of adding an alkali to the final reduction solution in the solid/liquid separation step (4), heating the resulting mixture, volatilizing an ammonia gas, and recovering ammonia.
